# EUROPEAN PATENT APPLICATION

(11) **EP 2 256 462 A1**
(43) Date of publication of application: **01.12.2010**
(21) Application number: 09290404.4
(22) Date of filing: 29.05.2009
(51) Int. Cl.: G01C 21/34

(54) **A context-aware route selection reminder**

(71) Applicant: Alcatel Lucent, 75008 Paris (FR)
(72) Inventor: Balageas, Fabien, 75008 Paris (FR); Durecu, Olivier, 75008 Paris (FR)
(74) Representative: Louiset, Raphael

(57) **Abstract**

A method for a context-aware route selection included within a mobile terminal and provided with a plurality of contextual information sensing means, said method comprising the following steps:
- define a planned event characterized at least by an event location;
- sensing contextual information in relation with the predefined event ;
- estimate at least a route from the current location of the mobile terminal to the predefined event location ;
- re-estimate at least a route in function with newly sensed contextual information in relation with the predefined event ;
- trigger a reminder comprising the most recent estimated route.

## Description

### FIELD OF THE INVENTION

The present invention relates generally to a calendar reminder, and more particularly to a context-aware computing and notification system based on ambient information.

### BACKGROUND OF THE INVENTION

Calendar reminders that trigger visual and/or audible content (reminder, to-do list, information) based on the location of a user have been common practice. *PlaceMail (*J.P Ludford et al., "Because I Carry My Cell Phone Anyway: Functional Location-Based Reminder Applications", Proceedings of CHI 2006*)* and *Place-Its* (T. Sohn et al., "Place-Its: Location-Based Reminders on Mobile Phones", Proc. Intl. Conf. on Ubiquitous Computing, 232-250, 2005*)* are two examples of such tools. They are, mainly, based on location sensing to deliver certain information when the user enters or exits some distance threshold around a predestined location.

More recent personal information systems (PIM), that tie together user location and time, have been also proposed. *TimeSpot* (M. Nathan et al., "TimeSpot: A Location-Sensitive Notification System") is an example of such location and time-sensitive reminder devices. *TimeSpot* allows users to demarcate locations and create event reminders associated with the locations. By tracking the location of the user, it will deliver an alert if the user is not at the predefined location at a given time as specified in his calendar. Otherwise, i.e. if the user is already in the right place at the expected time, no action is performed by the *TimeSpot.*

Other context information than location and time (such as nearby people or user activity) may be also considered (G. Chen et al., "A Survey of Context-Aware Mobile Computing Research", Dartmouth College, Hanover, NH, 2000*).*

However, up-to-date automatic reminders methods and systems passively use context information and mainly focus on deciding when to deliver or not a reminder. In other words, in addition to the limited context-awareness capability, current reminders are based on a superficial processing of context information (time difference or Euclidean distance). Furthermore, current automatic reminders deliver content mainly on the basis of basic conditional tests performed on tracked raw contextual information.

Hence, although the availability of context information, particularly thanks to emerging wireless identification and location sensing technologies, the remaining challenge is the effective use of this information.

One object of the present invention is to improve the usefulness of user reminders.

Another object of the present invention is to provide an insightful and heuristic contextual information processing.

Another object of the present invention is to enrich context information required by a calendar event.

Another object of the present invention is to enrich user interactions with calendar reminders.

Another object of the present invention is to enhance calendar capabilities for a better user service delivery.

Another object of the present invention is a calendar reminder based on a context-aware computing.

Another object of the present invention is to continuously or regularly maintain an advanced interpretation of a plurality of contextual information in relation with a predefined upcoming event.

Another object of the present invention is to utilize a plurality of contextual information so as to understand the context of the user.

Another object of the present invention is to provide the best context-aware route to reach the location of an upcoming event.

Another object of the present invention is to keep an updated view on changing contextual information concerning an upcoming event.

Another object of the present invention is to keep an updated view on traffic information.

Another object of the present invention is to provide the best route to go to an event location.

Another object of the present invention is to provide a collective usage of a calendar reminder.

### DESCRIPTION OF THE DRAWING

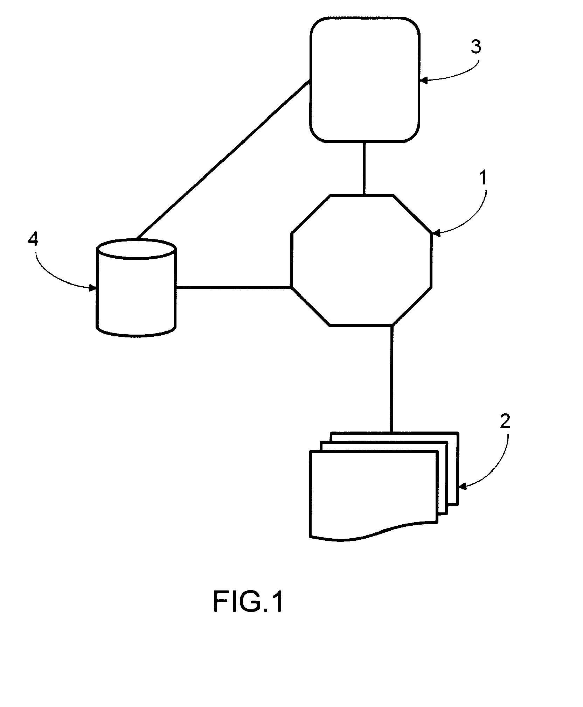

The objects, advantages and other features of the present invention will become more apparent from the following disclosure and claims. The following non-restrictive description of a preferred embodiment of the invention is given for the purpose of exemplification only with reference to the accompanying drawings in which Fig.1 is a schematic diagram illustrating modules of an automatic calendar reminder according to the present invention.

### SUMMARY OF THE INVENTION

The present invention relates to a method for a context-aware route selection included within a mobile terminal and provided with a plurality of contextual information sensing means, said method comprising the following steps:
- define a planned event characterized at least by an event location;
- sensing contextual information in relation with the predefined event ;
- estimate at least a route from the current location of the mobile terminal to the predefined event location ;
- re-estimate at least a route in function with newly sensed contextual information in relation with the predefined event ;
- trigger a reminder comprising the most recent estimated route.

The present invention further relates to a context-aware reminder for route selection included within a mobile terminal and provided with a plurality of contextual information sensing means, said reminder comprising:
- a logical module responsible for correlation processing between the details of a predefined event, the sensed contextual information through sensing modules; and a user profile ;
- a database for user profile and event details saving.

### DETAILED DESCRIPTION OF ILLUSTRATIVE EMBODIMENTS

With reference to figure 1, the calendar reminder comprises:
- a logical module 1 ;
- extensible sensing modules 2 ;
- a graphical user interface 3; and
- a database 4.

The graphical user interface 3 permits to:
- add/modify/remove an event ;
- explore/edit the user profile which contains the user events list and user data;
- explore/modify parameters of sensing modules 2, such as calibrate/configure a sensor or add/remove a sensor;
- explore/modify parameters of the logical module 1; and
- display a visual and/or audible content triggered by the logical module 1.

The user profile as well as sensor modules parameters are comprised within the database 4.

Details of an event, preferably, include
- a title or more generally a short content describing the planned event such as "meeting with bob" or the photo of bob ;
- a start-time: the time at which the event is planned. The event start-time may be relatively defined in accordance with the end-time or the start time of another event within the event list. The event start-time may be also defined in an absolute manner in correlation or not with the current spatial location of the mobile terminal;
- a location indicating where the event will take place. The location may be described in various way such as by entering a textual address or geographically indicating a location on a digital map or may be retrieved from other sources (for example from events history or user data) ;
- remaindering alert configuration such as the alert mode (i.e. tune, vibrator, message), the remaindering frequency and the time or the locality at which the first reminder may be triggered ; and
- preferred transport means to reach the planned event location.

The graphical user interface 3 permits also to remove/explore/reorganize expired and/or impending events with a possible detailed/abbreviated view of key details.

Event details may be imported from other directory (such as contact directory, calendar, user interactions: calls, messages) comprised within the mobile terminal which support such reminder. Moreover, others details may be also entered, namely, phone number(s), email(s), address(es) or name(s) of one or more person(s) concerned with the event.

In one embodiment, an estimated end-time of an event is required. This is, particularly, meaningful when the current event is related to another one such as
- a round-trip route: the end-time is used as the start-time for the return route ; or
- successive events in which the details of the next event depend on the current one details.

One can mention that the triggering time of a reminder concerning an upcoming event may be defined
- in a relative manner in relation with another event location/time, a user interaction (such as an incoming/outcoming call from/to a given person), a sensed parameter (such as the day-light, end of the rain, return of the traffic, elapsed time), or in relation with the local time at the planned event location (time zone); or
- in an absolute manner (at a given area, starting at a given distance from the event location, at a given time, starting at a given duration from the event start-time).

In one embodiment, the delivery time of a remainder may be automatically estimated based on the current location of the mobile terminal, and the required time to be on time for an upcoming event. In this case, the user is reminded about an upcoming event as soon as the remaining time is close to the estimated required time to reach the location of the upcoming event from the current location of the user.

The start/end time of a planned event may be given as a time interval such as "between 12h-14h", "after 18h", "morning", "afternoon". In particular, this allows choosing available transport means within the indicated time interval.

The logical module 1 is somewhat the intelligent core of the automatic calendar reminder. It is responsible for an advanced correlation processing between
- the details of an event comprised within the database 4;
- the sensed context information through sensing module 2; and
- the user profile comprised within the database 4.

The goal behind this advanced correlation processing is to:
- estimate possible routes leading to the location of an upcoming event from the current location of the user with taking into account the user preferences (considered as constraints within the context-aware computing);
- update the above processing following any change of a sensed context information in relation with the upcoming event details. As non-limitative examples, this update may be triggered due to the movement of the user (change of the starting point toward the target location), the transport means schedulers (departure/arrival times compared to the current time and correspondence time), transport means availability (cancelled/resumed flights, road closed, delayed trains, traffic jams, demonstration or sport events that could induce predictable traffic jams...), the weather (review the walking segment within the selected route).

In one embodiment, the update frequency may depend on the variation amount among sensed context information (for example, a 100 m variation of the current user location, as long as the departure time of a transport means to be used in the selected route is not yet reached, or each 10 minutes).

Estimated routes are optimized according to user preferences which may include some rules such as:
- get walking directions if a segment of the proposed route is less than a given threshold;
- select the cheapest route (such as no highway tolling, economic class) ;
- select the less time-consuming route ;
- propose to call a "Taxi Center" when it is no more possible to be on time concerning the upcoming event;
- propose to contact concerned persons by the upcoming event if it is no more possible to be on time even with all the available transport means or without taking into account the user preferences ;
- progressively increase the awareness of context information sensing (increase the frequency of context information sensing, increase the sensing accuracy, interrogate more than one information source to sense a context information) if it is likely to be late;
- progressively increase the advanced correlation sensibility and the remaindering frequency if the user is not yet at the right upcoming event location.

The user may appropriate a profile by indicating, for example:
- preferred public/private transport means such as bus, subway, plane, train, taxi, walking;
- transport subscriptions cards ;
- comfort requirement: business/economic class, charter/scheduled flight ;
- preferred lines/number of transport means;
- frequently used location such as home address, work address, cultural centers, subway station ;
- planned events with different priority levels;
- preferred criteria for routes selection such as the total spent time, the minimum of correspondence, the total cost, the shortest route, and transport means (on foot, tramway, subway, bus, train, etc.)

In one embodiment, the user may enter a plurality of linked events. As an example, the user enter three different events, namely at different times and locations, such as a first meeting at a "Cash Point", the second is "6 avenue Foch, Paris", then 1 hour after, the third location "Gare Saint-Lazare, Paris".

The logical unit 1 verifies the coherence among an event details (such as the start-time/end-time rationality of an event, the recognition or not of a location, the start time of an event compared to the current time). Moreover, having a global sight on active events, the logical unit 1 is responsible for the inter-event coherence. The inter-events coherence is mainly maintained by examining the start-time/end-time and location of not-yet-expired events. A warning content is immediately delivered if one or more events seem to be not realizable.

Contextual information may be sensed in real-time in different way. In fact, contextual information may be
a) wirelessly retrieved through adequate communication interfaces from specialized information sources such as:
   - transport traffic information, road/highway agencies (i.e. Bison Futé in France (*www.bison-fute.equipement.gouv.fr*), Sytadin (www.sytadin.fr) ;
   - radio traffic information such as Radio Data System (RDS);
   - planes schedulers information from airports services ;
   - Bus/train/subway schedulers information from public transport agency (i.e. RATP *www.ratp.fr,* SNCF *www.voyages-sncf.com*) ;
   - Taxi center services ;
   - Weather center (i.e.Météo France www.meteofrance.com)
   - online newspapers getting special events (such as demonstration or sport) that could have an impact on transport means
b) wirelessly sensed through adequate built-in sensors connection to wireless networks such as:
   - short-range wireless connectivity (such as BluetoothTM, HiperLAN, Wireless LAN, Home RF, WiFi and ZigBee) ;
   - Public Land Mobile Networks (PLMN) such as GSM, GPRS, W-CDMA and WiMAX ;
   - global navigation satellite system such as Global Positioning System (GPS) or Galileo ;
   - or any combination of connection within such networks (for example GSM/GPRS and WiFi or GPS and GSM).
c) directly retrieved from built-in modules such as the clock: time contextual information may be obtained from the built-in clock of the mobile terminal. A jet-lag, caused by a travel across several time zones, may be wirelessly retrieved from specialized servers (for example the world time server http://www.worldtimeserver.com).

Since the current location of the mobile terminal is a central context data which changes whenever the user moves compared to the target event location, a reliable location-tracking system is, preferably, required. In this regards, a plurality of localization methods may be combined so as to cover outdoor as well as indoor environments. As an example, one can mention:
- the mobile-IP protocol: when the mobile IP-terminal enters a new zone, it will be assigned a temporary IP address from a Foreign Agent (FA). By installing a context manager service on the FA, the mobile IP-terminal can queries the location of the current zone from the FA;
- the presence data from an IP Multimedia Subsystem (IMS) platform;
- connectivity-based localization technique such as triangulation or RFID sensing.

A plurality of other contexts which may be sensed and taken into account by the automatic calendar reminder such as:
- social events (such as strike, rallies, manifestations) which may retrieved from specialized web sites through dedicated communication interfaces ;
- a special event (football match, procession).

In addition to above-cited contextual information, other high-level context information such as
- the user current activity or the user availability may be taken into account. Such information may be retrieved from the user calendar, micro-blogging, social networks (such as Facebook, Twitter) or from Instant Messaging applications (such as MSN, ICQ^{™}) ; or
- total price of a route, the price of transport-means tickets, highway tolling.

Sensing modules parameters (such as configuration parameters, information sources, calibration parameters) are stored per contextual information type within the database 4. Sensing modules may be differently configured in terms of sensing periodicity, calibration frequency, alternatives sources of information, subscription details enabling a certain context information sensing.

Sensing periodicity may be different from one sensing module to another. As an example, weather sensing is less frequent then location sensing. Moreover, the periodicity of context information sensing may depend on time such as time of the day (traffic at rush hour), day of the week (traffic on Monday/Saturday), and season of the year (holiday) or on the user movement speed (time zone).

Sensing modules 2 periodically sense the current context information then delivers these row data to the logical module 1. As non-limitative example of such contextual information, one can mention: time, user location, road traffic, roadwork, cancelled flight, traffic perturbation, weather (for example trouble, rain, temperature, storm).

Sensing modules 2 aims to collect as much as possible contextual information that may let the logical module improves its understanding of the ambient context of the user. Then, logical module 1 regularly compares the specification of an upcoming event to most recent discovered contextual information so us to keep an updated context-aware routes solution to the target location within the time and user preferences constraints.

Hence, the logical module 1 regularly performs an estimation of possible routes leading to the target location, mainly in function of:
- transport information,
- the current time ;
- the current location of the user; and
- the user profile (user preferences).

Sensed contextual information, mainly, focus on any contextual information intervening in route estimation. These may comprise the current location of the user (starting point in the route), transport means schedulers and availabilities (transport means change, stopover), weather (walking distance) and time.

It is to be noted that a route may combine several means of transport (for example a route may successively comprise: subway then train then plane then taxi then walking then boat then subway). Hence, the logical module 1 performs a multimode transportation investigation by simultaneously sensing all transports means leading to the location of the planned event from the current location of the user under the constraints of the user preferences. As an example, if the user is currently in Paris and the location of an upcoming event is also somewhere in Paris, then in function with user preference, contextual information may be sensed from RATP (www.ratp.fr)_{.} Sytadin (www.sytadin.fr) , Les Taxis Bleus (www.taxis-bleus.com), Météo Paris (http://www.meteo-paris.com/) and GPS connection. In the case of a long distance, a comparison intra-transport means, such as airline ticket comparator, may be also sensed from adequate servers.

Then, the logical module 1 triggers the best route (or the n best routes), if it (they) exist(s), according to triggering configuration (alerting method, triggering frequency, triggering in function of time, location or other event details). The logical module 1 select the most appropriate notification method (visual and/or audible, lightness and/or volume, zoom factor) in accordance the ambient context information and the user perception ability.

In an embodiment, if the only possible route, according to the user preference, to be on time at the location of an upcoming event will be no more available in a given time period, the logical module automatically triggers a reminder thereof such as "it is time to go", including the predictable delay.

Displayed route through the graphic user interface 3 may be a geographical route drawn on a digital map, a textual, a visual and/or an audible content.

The logical module 1, mainly, keeps an updated view on fast-varying contextual characteristics such as the user location, traffic information and time of the day. Then it automatically updates his calculation according to the discovered contextual values.

In one embodiment, within a walking segment within the route toward a target event location, the context-aware reminder estimates the walking speed (by numbering the footstep of the user as does, for example, the walk mate application provided by Sony Ericsson W595) of the user and then re-evaluate the remaining time; and even proposes a preferred walking speed to be on time.

The logical module maintains a global calculation so that no event will be missed. Best routes to an event location are regularly re-evaluated following any change of contextual information (such as time, location, transport means schedules, transport means availability, traffic state, weather). Then, solution set is sorted according to user preferences. Namely, these solutions may be sorted according to different criteria such as the cost, the required time, the transport means, the number of correspondence, the shortest distance, walking distant, waiting time.

It must be noted that different sensing modules 3 may be developed as "context widgets", each one permitting to retrieve a given context attribute. A context widget is responsible for sensing contextual information then communicating it to the logical module. A context widget is mainly characterized by its ability to provide the logical module 1 with a contextual information in real-time through dedicated application programming interface.

In one embodiment, some contextual information is only available for subscribers to such services.

It must be noted that the present context-aware calendar reminder may be for individual as well as collective usage. In the case of a shared event, each member is informed about the arrival to the target location or about the current location of the other parties. This results of the optional diffusion of a member of its current location to the other meeting members. In another embodiment, an active nearby detection means of a concerned member with an upcoming event may be added to sensing module 2.

It must be also noted that content triggering may occur without annoying the user by continuously comparing the target location and the current position of the user. In other words, there is no need to provide a reminder if the user is already at the right place of an upcoming event.

The ubiquity of mobile phone networks, positioning systems (GPS), tiny sensing means and mobiles terminal (such as PDA or mobile phones) enables permanent context information availability to users. These factors allow the context-aware reminder system to be incorporated within any familiar mobile device able to support context sensing technology.

The present context-aware reminder may be included within several wireless handheld devices with wireless networking capabilities. In particular, mobile phones and Personal digital Assistant (PDA) provide a potentially suitable and truly ubiquitous platform for the detection of personal context such as location, time, road traffic, subway schedulers as well as the graphical user interface for reminders delivery.

It must be noted that "Context information" or "contextual information" are intended to mean, here, any information that can be sensed then be used to characterize the situation of an entity. An entity is a location, a state or any object that is considered relevant to a user or a mobile terminal and a predefined event characterized at least by a time and a location.

It is to be noted that the word "an event", used herein, is intended to mean an appointment, a meeting, a visitation, a rendezvous or more generally an act of going somewhere to do something(s) or to see someone(s)/something(s).

Reference throughout the specification to "one embodiment" or ""an embodiment" means that a particular feature, structure or characteristic described in connection with the embodiment is included in at least one embodiment of the present invention. Thus, the appearance of the phrases "in one embodiment" or "in an embodiment" in various places throughout the specification are not necessarily all referring to the same embodiment. Furthermore, the particular features, structures, or characteristics may be combined in any suitable manner in one or more embodiments.

## Claims

1. A method for a context-aware route selection included within a mobile terminal and provided with a plurality of contextual information sensing means **characterized in that** comprise the following steps:
- define a planned event characterized at least by an event location;
- sensing contextual information in relation with the predefined event ;
- estimate at least a route from the current location of the mobile terminal to the predefined event location ;
- re-estimate at least a route in function with newly sensed contextual information in relation with the predefined event ;
- trigger a reminder comprising the most recent estimated route.

2. The method of claim 1, wherein the sensed contextual information comprises contextual information intervening in the route estimation.

3. The method of any of claims 1 to 2, wherein the sensed contextual information comprises transport traffic information.

4. The method of any of claims 1 to 3, wherein the estimation step of the route takes into account the user preferences.

5. The method of any of claims 1 to 4, wherein the sensed contextual information comprises transport information, social events, current location of the user, weather and the current time.

6. The method of any of claims 1 to 5, wherein the estimated route comprises more than one transport means.

7. A context-aware reminder for route selection included within a mobile terminal and provided with a plurality of contextual information sensing means **characterized in that** comprises:
- a logical module responsible for correlation processing between the details of a predefined event, the sensed context information through sensing modules, and a user profile ;
- a database for user profile and event details saving.
